# EUROPEAN PATENT SPECIFICATION

(11) **EP 1 434 746 B1**
(45) Date of publication and mention of the grant of the patent: **13.04.2005**
(21) Application number: 01978019.6
(22) Date of filing: 08.10.2001
(51) Int. Cl.: C04B 28/34

(54) **PHOSPHATE BINDER AND ITS PREPARATION**
PHOSPHATBINDER UND SEINE HERSTELLUNG
LIANT PHOSPHATE ET PREPARATION CORRESPONDANTE

(43) Date of publication of application: 07.07.2004
(73) Proprietor: Mohammad, Pakiza, B-1150 Brussels (BE)
(72) Inventor: Mohammad, Pakiza, B-1150 Brussels (BE)
(74) Representative: Powis de Tenbossche, Roland
(86) International application number: PCT/BE2001/000174
(87) International publication number: WO 2003/031366

(56) References cited:
- EP-A- 0 507 463
- DE-A- 2 038 290
- US-A- 2 687 967
- US-A- 3 179 527
- US-A- 4 504 555

## Description

The present invention relates to an inorganic binder, most precisely to an inorganic phosphate binder.

Inorganic phosphate binder have already been proposed in the past

For example in a previous patent application W09903797 in the name of Metal Chemical and Haji Anas, a polymeric matrix is disclosed, said matrix comprising a binder formed by mixing an alkali metal silicate aqueous solution with a powder comprising silico-aluminous reactive raw materials. A polymerization time of more than one hour is however necessary for reaching a sufficient hardening of the matrix.

It has also been proposed in US 6,139,619 to form a binder by mixing a water soluble silicate with a water soluble amorphous inorganic phosphate glass in an aqueous medium. The hardening of the binder requires the removal of water by a heat treatment.

In US 4,375,551, an acid solution is prepared by mixing Al₂O₃.3H₂O with phosphoric acid, said acid solution being then mixed with calcium silicate. The so obtained binder has after hardening poor mechanical strength.

The present invention has for subject matter a binder which can be sufficiently hardened within a term of less than 10 minutes and which has excellent mechanical properties.

The inorganic binder of the invention is characterized by calcium silicate sites which are connected the one with the other by alumina-silica phosphate bonds.

Advantageously, the calcium silicate sites are calcium meta silicate sites having a substantially acicular nature with a length/diameter ratio from 2/1 to 50/1, advantageously from 3/1 to 20/1.

Preferably, the calcium meta silicate sites has an average length from 10µm to 10mm, advantageously from 50µm to 5 mm.

The calcium silicate sites act as cross-linking sites for alumina-silica phosphate bonds.

The alumina-silica phosphate bonds have a weight ratio Al₂O₃/SiO₂ ranging from 0.3 :1 and 10 :1, advantageously from 0.6 :1 and 6 :1.

According to an advantageously embodiment, the weight ratio calcium silicate sites/alumina-silica phosphate bonds is comprised between 0.1 and 1.1, advantageously between 0.3 and 0.9, preferably between 0.4 and 0.7.

The invention relates also to a product comprising at least a binder according to the invention and at least one filler and/or reinforced material.

The invention relates also to a kit for the preparation of inorganic binder composition according to the invention, said kit comprising :
- a container of bag containing a water insoluble calcium silicate, and
- one or more containers or bags containing compounds for preparing an acid alumina-silica phosphate solution, the pH of said solution measured at 20°C being less than 1.5, advantageously less than 1, preferably less than 0.5.

A further subject matter of the invention is a process for the preparation of a binder according to the invention, in which water insoluble calcium silicate particles are mixed with an acid alumina-silica solution at a temperature lower than 50°C, said acid alumina-silca solution having a pH less than 2, advantageously less than 1.5, for example comprised between 0.1 and 1.5, preferably comprised between 0.5 and 1.5. The acid pH is advantageously obtained by using phosphoric acid or an acid mixture containing at least phosphoric acid. Preferably, substantially only phosphoric acid is used as mineral acid, most preferably as acid for lowering the pH of the solution to less than 2.

The calcium silicate particles are advantageously calcium meta silicate particles having a substantially acicular nature with a length/diameter ratio from 2/1 to 50/1, advantageously from 3/1 to 20/1.

The calcium meta silicate particles have preferably an average length from 10µm to 10mm, advantageously from 50µm to 5 mm.

The calcium silicate particles act as cross-linking sites for alumina-silica phosphate bonds. It seems also that the presence of insoluble calcium silicate particles catalyzes the formation of alumina-silica phosphate bonds.

In the process of the invention, the alumina-silica phosphate solution has a weight ratio Al₂O₃/SiO₂ ranging from 0.3 :1 and 10 :1, preferably from 0.6 :1 and 6 :1.

For example, the weight ratio calcium silicate particles/alumina-silica phosphate solution is comprised between 0.1 and 1.1, preferably from 0.3 and 0.9, most preferably between 0.4 and 0.7.

In the process of the invention, a filler and/or a reinforced material is mixed with the calcium silicate particles before being mixed with the acid alumina-silica phosphate solution and/or a filler and/or a reinforced material is mixed to the mixture calcium silicate/alumina ― silica phosphate solution, before or during its hardening.

Preferably, the hardening of the binder is carried out at a temperature comprised between 0°C and 50°C, possibly under pressure.

Examples of fillers or reinforced materials which can be mixed with the binder before its preparation, during its preparation, before its hardening or during its hardening are :
- waste materials, such as finely divided waste material, for example fuel ashes, fly ashes, buildings waste materials, etc.
- flake-like materials such as mica, etc.,
- silica sand, silica flour,
- coloring agents or materials, such as inorganic coloring agents, pigments, etc.
- cellulose and/or protein base fibers, such as natural fibers, flax, chip, straw, hemp, wool fibers, etc.
- synthetic fibers, such as organic synthetic fibers, inorganic synthetic fibers, such as polyesters, polypropylene, glass and ceramic fibers, etc.
- natural and synthetic organic base waste materials, such as saw dust, rice husk, straw and recycled organic waste,
- natural fibers of mineral origin,
- natural material, possibly treated (for example heat treated), such as perlite, vermiculite, etc.
- etc.

Additives can be added to the binder before its preparation, during its preparation, before its hardening or during its hardening, such additives are for example :
- foaming agents, such as water peroxide, organic peroxide, etc.
- viscosity regulating agent, such as superplasticizer
- material for improving the impermeability or the water repulsion such as lignosulfonates and silica fume
- etc.

The binder of the invention is prepared by using an acid alumina-silica phosphate solution, said solution is advantageously prepared by reacting aluminum oxide powder (size advantageously lower than 50µm, preferably lower than 30µm, for example from 5 to 25 µm) with a purity of more than 95%, preferably more than 99%, silica powder (size advantageously lower than 50µm, preferably lower than 30µm, for example from 10 to 25 µm) with a purity of more than 95%, preferably of more than 99%, and phosphoric acid as an aqueous phosphoric acid or in presence of an aqueous medium. The phosphoric acid has preferably a purity of more than 95%, most preferably of more than 99%. Phosphoric acid is available in various concentration. Preferably, the phosphoric acid will be a phosphoric aqueous solution with a phosphoric acid concentration of more than 75%, preferably of more than 85%. Preferably, the silica powder is first mixed with the phosphoric acid and then the alumina particles are added.

The acid alumina-silica phosphate solution contains possibly some other acids, such as organic acid, strong mineral acid, etc, however, in this case, the content of such acid will preferably be less than 10% of the phosphoric acid content of the solution.

Instead of using aluminum oxide, it is possible to use aluminum phosphate, aluminum hydroxide, etc. However, aluminum oxide is preferred.

Instead of using silica, preferably precipitated silica particles, it is possible to use waste material issuing from glass bottles.

Possibly the aqueous phosphoric acid solution contains other solvents, such as alcohol, etc.
When a foamed product is desired, more water or solvent will be used for decreasing as much as possible the viscosity.

The acid alumina silica phosphate solution has advantageously a pH lower than 2, preferably lower than 1.

It has been observed that when using silica particles for the preparation of the acid alumina phosphate solution with a pH lower than 2, most preferably lower than 1, the dissolution of alumina particles was improved. The presence of solubilized SiO₂ in the acid solution was also improving the formation of the bonds when adding the water insoluble calcium silicate particles. Even, if some calcium silicate particles are solubilized due to the low pH, some calcium silicate particles remains insoluble, due for example to the increase of pH to a value comprised between 3 and 6.

The binder of the invention is suitable for preparing product having a light weight (such a weight from 70 to 140 kg/m³) or a heavy weight (such as weight of 2,000 kg/m³ or even more).

Products of the invention have high mechanical properties, such as compression strength of more than 40N/mm², bending strength of more than 10 N/mm², etc.

Products of the invention can be used as insulating materials (as panels, sheets, granules, etc), fire protection material, heat protection material, chemical protection material, buildings material (such as bricks, concrete, etc.), for making molds, shaping, casting and moldings products, tiles, roofing sheet, etc.

Details and characteristics of the invention will appear from the description of the following examples.

In said examples, the following products have been used :
WATER: water with a low calcium/magnesium content (less than 100 ppm)
SiO₂ : precipitated SiO₂ particles with an average size of 10-15µm - purity of 99%
Al₂O₃ : powder with an average particle size of 10-15 µm - purity of 99%
Phosphoric acid : aqueous solution containing 90% phosphoric acid
Calcium silicate: calcium meta silicate powder, water insoluble, acicular nature, length of 1 mm, diameter 100µm.

### Examples of Binders

The binders have been prepared by adding SiO₂ particles to phosphoric acid. After dissolution of the SiO₂ particles, Al₂O₃ particles were added. An acid alumina silica phosphate aqueous solution was so prepared. The pH of said acid solution was then measured at 20°C. Possibly some water was added.

To said acid solution, calcium silicate particles was added. 5 to 10 minutes after the addition of calcium silicate particles, the binder was hardened. Said hardening was made at room temperature.

The following table gives the composition of the binders prepared.

| Binder | 1 | 2 | 3 | 4 | 5 | 6 | 7 | 8 | 9 | 10 |
|---|---|---|---|---|---|---|---|---|---|---|
| SiO₂ (g) | 35 | 16 | 21 | 13.6 | 46.2 | 60 | 182 | 130.8 | 97.2 | 233 |
| Al₂O₃ (g) | 24 | 23 | 13 | 50.8 | 30.8 | 60 | 136.5 | 21.8 | 58.1 | 46.6 |
| Phosphoric acid (g) | 141 | 141 | 167 | 123 | 135.6 | 180 | 182 | 87.4 | 184.7 | 350.4 |
| Molar Ratio SiO₂/P₂O₅ Of the solution | 0.4 3 | 0.2 | 0.2 | 0.19 | 0.59 | 0.58 | 1.73 | 2.62 | 0.92 | 1.15 |
| Calcium silicate (g) | 120 | 100 | 150 | 60 | 100 | 150 | 200 | 140 | 240 | 310 |
| Water (ml) | 80 | 40 | | | 25 | 60 | 118 | 21 | 71 | 65 |
| pH of the acid solution | 0.5 | 0.5 | 0.5 | 0.5 | 0.5 | 0.5 | 0.5 | 0.5 | 0.5 | 0.5 |
| pH of the solution after addition of the calcium silicate | 1 | 0.5 | 1 | 0.5 | 0.5 | 1.5 | 1 | 1 | 1.5 | 1.5 |
| Appearance of the mixture after the addition of the calcium silicate (LS, S-D, P)* | LS | LS | S-D | S-D | P | LS | LS | S-D | P | P |

| | | | | | | | | | | |
|---|---|---|---|---|---|---|---|---|---|---|
| * : LS = Liquid suspension / S-D = Semi-dry / P = Pasty | | | | | | | | | | |

In the process of the invention, the amount of calcium silicate added to the acid silica alumina phosphate solution is such that the weight ratio calcium silicate /SiO₂ present in the acid solution is advantageously greater than 1, preferably greater than 1.5, most preferably greater than 2, for example comprised between 1 and 5, advantageously comprised between 1.5 and 3.5.

### Examples of products of the invention

The binder n°2 which is liquid after its preparation was mixed with various additives and/or filler.

The following table gives the different additives and fillers used.

| Product n° | 1 | 2 | 3 | 4 | 5 | 6 |
|---|---|---|---|---|---|---|
| Binder (part by volume) | 1 | 1 | 1 | I | 1 | 1 |
| Additive (Part by volume) | H₂O₂ 0.13 | Silica Fume 0.42 | Aluminum powder 0.12 | Super Plasticizer 0.15 | Ligno-Sulfonate 0.13 | Quartz 0.54 |
| Filler (part by volume) | Vermiculite 0.33 | Straw 3 parts | Fly ash 0.52 | Chip 1.22 | Flax Fiber 0.75 | Silica Flour 0.25 |
| Appearance of the product | Foam, low density | Low density | Foam Low density | Low density | Low density | Heavy density |

## Claims

1. An inorganic binder having calcium silicate sites which are connected the one with the other by alumina-silica phosphate bonds, the calcium silicate sites acting as cross-linking sites for the alumina-silica phosphate bonds with a weight ratio Al₂O₃/SiO₂ ranging from 0.3 :1 and 10 :1, advantageously from 0.6 :1 and 6 :1.

2. The binder of claim 1, in which the alumina-silica phosphate bonds are bonds prepared from a mixture of water insoluble calcium silicate particles with an acid alumina-silica phosphate solution comprising solubilized SiO₂ and having a pH less than 2, said alumina-silica phosphate solution having a weight ratio Al₂O₃/SiO₂ ranging from 0.3 :1 and 10 :1, whereby the weight ratio water insoluble calcium silicate particles/solubilized SiO₂ present in the alumina-silica phosphate solution is greater than 1, preferably greater than 1.5.

3. The binder of claim 1, in which the calcium silicate sites are calcium meta silicate sites having a substantially acicular nature with a length/diameter ratio from 2/1 to 50/1, advantageously from 3/1 to 20/1.

4. The binder of claim 3, in which the calcium meta silicate sites has an average length from 10µm to 10mm, advantageously from 50µm to 5 mm.

5. The binder of anyone of the claims 1 to 4, in which the weight ratio calcium silicate sites/alumina-silica phosphate bonds is comprised between 0.1 and 1.1, advantageously between 0.3 and 0.9, preferably between 0.4 and 0.7.

6. A product comprising at least a binder according to anyone of the claims 1 to 5 and at least one filler.

7. A kit for the preparation of inorganic binder composition according to anyone of the claims 1 to 5, said kit comprising :
- a container of bag containing a water insoluble calcium silicate, and
- one or more containers or bags containing compounds for preparing an acid alumina-silica phosphate solution or containing an alumina-silica phosphate solution, the pH of said solution measured at 20°C being less than 1.5, advantageously less than 1, preferably less than 0.5, in which the silica is solubilized.

8. A process for the preparation of a binder according to anyone of the claims 1 to 5, in which water insoluble calcium silicate particles are mixed with an acid alumina-silica phosphate solution at a temperature lower than 50°C, said acid alumina-silica phosphate solution comprising solubilized SiO2 and having a pH less than 2, advantageously less than 1.5, preferably comprised between 0.5 and 1.5, said alumina-silica phosphate solution having a weight ratio Al₂O₃/SiO₂ ranging from 0.3:1 and 10 :1, advantageously from 0.6 :1 and 6 :1.

9. The process of claim 8, in which the weight ratio water insoluble calcium silicate particles / solubilized SiO₂ present in the alumina-silica phosphate solution is greater than 1, preferably greater than 1.5.

10. The process of claim 8, in which the calcium silicate particles are calcium meta silicate particles having a substantially acicular nature with a length/diameter ratio from 2/1 to 50/1, advantageously from 3/1 to 20/1.

11. The process of claim 10, in which the calcium meta silicate particles have an average length from 10µm to 10mm, advantageously from 50µm to 5 mm.

12. The process of anyone of the claims 8 to 11, in which the calcium silicate particles act as cross-linking sites for alumina-silica phosphate bonds.

13. The process of anyone of the claims 8 to 12, in which the weight ratio calcium silicate particles/alumina-silica phosphate solution is comprised between 0.1 and 1.1, advantageously between 0.3 and 0.9, preferably between 0.4 and 0.7.

14. The process of anyone of the claims 8 to 13, in which a filler is mixed with the calcium silicate particles before being mixed with the acid alumina-silica phosphate solution and/or a filler is mixed to the mixture calcium silicate/alumina - silica phosphate solution, before its hardening.

15. The process of any one of the claims 8 to 14, in which the hardening of the binder is carried out at a temperature comprised between 0°C and 50°C.

16. The process of anyone of the claims 8 to 15, in which the binder is hardened under pressure.

17. The process of anyone of the claims 8 to 16, in which the water insoluble calcium silicate is a calcium meta silicate having a substantially acicular nature with a length/diameter ratio from 2/1 to 50/1, advantageously from 3/1 to 20/1.

18. The process of claim 17, in which the calcium meta silicate has an average length from 10µm to 10mm, advantageously from 50µm to 5 mm.

19. The process of anyone of the claims 8 to 18, in which the amount of calcium silicate added to the acid silica alumina phosphate solution is such that the weight ratio calcium silicate / SiO₂ present in the acid solution is comprised between 1 and 5, advantageously comprised between 1.5 and 3.5.

20. The process of claim 19, in which the amount of calcium silicate added to the acid silica alumina phosphate solution is such that the weight ratio calcium silicate / SiO₂ present in the acid solution is greater than 2.

21. The process of anyone of the claims 8 to 20, in which the acid silica alumina phosphate solution is prepared by mixing a silica and/or alumina mixture with an acid consisting substantially only of phosphoric acid, and by adding possibly to the formed acid solution further silica and/or alumina.

22. The process of claim 21, in which the silica used for the preparation of the acid silica alumina phosphate solution is precipitated silica.

## Patentansprüche

1. Anorganischer Binder mit Calciumsilicatstellen, die miteinander durch Aluminiumoxid-Siliciumoxid-Phosphatbindungen verbunden sind, wobei die Calciumsilicatstellen als Vernetzungsstellen für die Aluminiumoxid-Siliciumoxid-Phosphatbindungen wirken mit einem Gewichtsverhältnis Al₂O₃/SiO₂ im Bereich von 0,3:1 und 10:1, mit Vorteil von 0,6:1 und 6:1.

2. Binder nach Anspruch 1, bei dem die Aluminiumoxid-Siliciumoxid-Phosphatbindungen Bindungen sind, die gebildet sind aus einer Mischung von in Wasser unlöslichen Calciumsilicatpartikeln mit einer sauren Aluminiumoxid-Siliciumoxid-Phosphatlösung, die solubilisiertes SiO₂ enthält und einen pH von weniger als 2 aufweist, wobei die Aluminiumoxid-Siliciumoxid-Phosphatlösung ein Gewichtsverhältnis Al₂O₃/SiO₂ im Bereich von 0,3:1 und 10:1 aufweist, wodurch das Gewichtsverhältnis wasserunlösliche Calciumsilicatpartikel/solubilisiertes SiO₂ in der Aluminiumoxid-Siliciumoxid-Phosphatlösung größer ist als 1, bevorzugt größer als 1,5.

3. Binder nach Anspruch 1, bei dem die Calciumsilicatstellen Calciummetasilicatstellen mit einer im Wesentlichen nadelförmigen Natur mit einem Verhältnis Länge/Durchmesser von 2/1 bis 50/1, mit Vorteil von 3/1 bis 20/1 sind.

4. Binder nach Anspruch 3, bei dem die Calciummetasilicatstellen eine durchschnittliche Länge von 10 µm bis 10 mm, mit Vorteil von 50 µm bis 5 mm aufweisen.

5. Binder nach einem der Ansprüche 1 bis 4, bei dem das Gewichtsverhältnis Calciumsilicatstellen/Aluminiumoxid-Siliciumoxid-Phosphatbindungen zwischen 0,1 und 1,1, mit Vorteil zwischen 0,3 und 0,9, bevorzugt zwischen 0,4 und 0,7 liegt.

6. Produkt umfassend mindestens einen Binder nach einem der Ansprüche 1 bis 5 und mindestens einen Füllstoff.

7. Kit zur Herstellung einer anorganischen Binderzusammensetzung nach einem der Ansprüche 1 bis 5, wobei der Kit umfasst:
- einen Behälter oder Beutel, der ein in Wasser unlösliches Calciumsilicat enthält, und
- einen oder mehrere Behälter oder Beutel, die Verbindungen zur Herstellung einer sauren Aluminiumoxid-Siliciumoxid-Phosphatlösung enthalten oder eine Aluminiumoxid-Siliciumoxid-Phosphatlösung enthalten, wobei der pH dieser Lösung gemessen bei 20 °C weniger als 1,5, mit Vorteil weniger als 1, bevorzugt weniger als 0,5 beträgt, in der das Siliciumoxid solubilisiert wird.

8. Verfahren zur Herstellung eines Binders nach einem der Ansprüche 1 bis 5, bei dem in Wasser unlösliche Calciumsilicatpartikel mit einer sauren Aluminiumoxid-Siliciumoxid-Phosphatlösung bei einer Temperatur unter 50 °C vermischt werden, wobei die Aluminiumoxid-Siliciumoxid-Phosphatlösung solubilisiertes SiO₂ umfasst und einen pH von weniger als 2, mit Vorteil weniger als 1,5, bevorzugt zwischen 0,5 und 1,5 aufweist, wobei die Aluminiumoxid-Siliciumoxid-Phosphatlösung ein Gewichtsverhältnis Al₂O₃/SiO₂ im Bereich von 0,3:1 und 10:1, mit Vorteil von 0,6:1 und 6:1 aufweist.

9. Verfahren nach Anspruch 8, bei dem das Gewichtsverhältnis von wasserunlöslichen Calciumsilicatpartikeln/solubilisiertes SiO₂ in der Aluminiumoxid-Siliciumoxid-Phosphatlösung größer ist als 1, bevorzugt größer ist als 1,5.

10. Verfahren nach Anspruch 8, bei dem die Calciumsilicatpartikel Calciummetasilicatpartikel sind, die eine im Wesentlichen nadelförmige Natur mit einem Verhältnis Länge/Durchmesser von 2/1 bis 50/1, mit Vorteil von 3/1 bis 20/1 aufweisen.

11. Verfahren nach Anspruch 10, bei dem die Calciummetasilicatpartikel eine durchschnittliche Länge von 10 µm bis 10 mm, mit Vorteil von 50 µm bis 5 mm aufweisen.

12. Verfahren nach einem der Ansprüche 8 bis 11, bei dem die Calciumsilicatpartikel als Vernetzungsstellen für Aluminiumoxid-Siliciumoxid-Phosphatbindungen wirken.

13. Verfahren nach einem der Ansprüche 8 bis 12, bei dem das Gewichtsverhältnis Calciumsilicatpartikel/Aluminiumoxid-Siliciumoxid-Phosphatlösung zwischen 0,1 und 1,1, mit Vorteil zwischen 0,3 und 0,9, bevorzugt zwischen 0,4 und 0,7 liegt.

14. Verfahren nach einem der Ansprüche 8 bis 13, bei dem ein Füllstoff mit den Calciumsilicatpartikeln vermischt wird, bevor sie mit der sauren Aluminiumoxid-Siliciumoxid-Phosphatlösung gemischt werden und/oder ein Füllstoff mit der Mischung von Calciumsilicat/Aluminiumoxid-Siliciumoxid-Phosphatlösung vor dem Härten vermischt wird.

15. Verfahren nach einem der Ansprüche 8 bis 14, bei dem das Härten des Binders bei einer Temperatur zwischen 0 °C und 50 °C vorgenommen wird.

16. Verfahren nach einem der Ansprüche 8 bis 15, bei dem der Binder unter Druck gehärtet wird.

17. Verfahren nach einem der Ansprüche 8 bis 16, bei dem das in Wasser unlösliche Calciumsilicat ein Calciummetasilicat ist mit einer im Wesentlichen nadelförmigen Natur mit einem Verhältnis Länge/Durchmesser von 2/1 bis 50/1, mit Vorteil von 3/1 bis 20/1.

18. Verfahren nach Anspruch 17, bei dem das Calciummetasilicat eine durchschnittliche Länge von 10 µm bis 10 mm, mit Vorteil von 50 µm bis 5 mm aufweist.

19. Verfahren nach einem der Ansprüche 8 bis 18, bei dem die Menge an zur sauren Siliciumoxid-Aluminiumoxid-Phosphatlösung zugesetztem Calciumsilicat derart ist, dass das Gewichtsverhältnis Calciumsilicat/SiO₂ in der sauren Lösung zwischen 1 und 5 liegt, mit Vorteil zwischen 1,5 und 3,5 liegt.

20. Verfahren nach Anspruch 19, bei dem die Menge an zur sauren Siliciumoxid-Aluminiumoxid-Phosphatlösung zugesetztem Calciumsilicat derart ist, dass das Gewichtsverhältnis Calciumsilicat/SiO₂ in der sauren Lösung größer als 2 ist.

21. Verfahren nach einem der Ansprüche 8 bis 20, bei dem die Siliciumoxid-Aluminiumoxid-Phosphatlösung durch Vermischen einer Siliciumoxid- und/oder Aluminiumoxidmischung mit einer Säure bestehend im Wesentlichen nur aus Phosphorsäure und gegebenenfalls durch Hinzufügen von weiterem Siliciumoxid und/oder Aluminiumoxid zur gebildeten sauren Lösung hergestellt wird.

22. Verfahren nach Anspruch 21, bei dem das für die Herstellung der sauren Siliciumoxid-Aluminiumoxid-Phosphatlösung verwendete Siliciumoxid gefälltes Siliciumoxid (Kieselhydrogel) ist.

## Revendications

1. Liant inorganique ayant des sites de silicate de calcium qui sont connectés les uns aux autres par des liaisons de phosphate d'alumine-silice, les sites de silicate de calcium agissant comme des sites de réticulation pour les liaisons de phosphate d'alumine-silice avec un rapport en poids Al₂O₃/SiO₂ allant de 0,3:1 à 10:1, avantageusement de 0,6:1 à 6:1.

2. Liant selon la revendication 1, dans lequel les liaisons de phosphate d'alumine-silice sont des liaisons préparées à partir d'un mélange de particules de silicate de calcium insolubles dans l'eau avec une solution acide de phosphate d'alumine-silice comprenant du SiO₂ solubilisé et ayant un pH de moins de 2, ladite solution de phosphate d'alumine-silice ayant un rapport en poids Al₂O₃/SiO₂ allant de 0,3:1 à 10:1, par quoi le rapport en poids des particules de silicate de calcium insolubles dans l'eau/SiO₂ solubilisé présent dans la solution de phosphate d'alumine-silice est plus grand que 1, de préférence plus grand que 1,5.

3. Liant selon la revendication 1, dans lequel les sites de silicate de calcium sont des sites de métasilicate de calcium ayant une nature substantiellement aciculaire avec un rapport longueur/diamètre de 2/1 à 50/1, avantageusement de 3/1 à 20/1.

4. Liant selon la revendication 3, dans lequel les sites de métasilicate de calcium ont une longueur moyenne de 10 µm à 10 mm, avantageusement de 50 µm à 5 mm.

5. Liant selon l'une quelconque des revendications 1 à 4, dans lequel le rapport en poids des sites de silicate de calcium/liaisons de phosphate d'alumine-silice est compris entre 0,1 et 1,1, avantageusement entre 0,3 et 0,9, de préférence entre 0,4 et 0,7.

6. Produit comprenant au moins un liant selon l'une quelconque des revendications 1 à 5 et au moins une charge.

7. Trousse pour la préparation d'une composition de liant inorganique selon l'une quelconque des revendications 1 à 5, ladite trousse comprenant :
- un conteneur ou sac contenant un silicate de calcium insoluble dans l'eau, et
- un ou plusieurs conteneurs ou sacs contenant des composés pour préparer une solution acide de phosphate d'alumine-silice, le pH de ladite solution mesuré à 20°C étant de moins de 1,5, avantageusement moins de 1, de préférence moins de 0,5, où la silice est solubilisée.

8. Procédé pour la préparation d'un liant selon l'une quelconque des revendications 1 à 5, dans lequel les particules de silicate de calcium insolubles dans l'eau sont mélangées avec une solution acide de phosphate d'alumine-silice à une température inférieure à 50°C, ladite solution acide de phosphate d'alumine-silice comprenant du SiO₂ solubilisé et ayant un pH de moins de 2, avantageusement moins de 1,5, de préférence compris entre 0,5 et 1,5, ladite solution de phosphate d'alumine-silice ayant un rapport en poids de Al₂O₃/SiO₂ allant de 0,3:1 à 10:1, avantageusement de 0,6:1 à 6:1.

9. Procédé selon la revendication 8, dans lequel le rapport en poids des particules de silicate de calcium insolubles dans l'eau/SiO₂ solubilisé présent dans la solution de phosphate d'alumine-silice est plus grand que 1, de préférence plus grand que 1,5.

10. Procédé selon la revendication 8, dans lequel les particules de silicate de calcium sont des particules de métasilicate de calcium ayant une nature substantiellement aciculaire avec un rapport longueur/diamètre de 2/1 à 50/1, avantageusement 3/1 à 20/1.

11. Procédé selon la revendication 10 dans lequel les particules de métasilicate de calcium ont une longueur moyenne de 10 µm à 10 mm, avantageusement de 50 µm à 5 mm.

12. Procédé selon l'une quelconque des revendications 8 à 11, dans lequel les particules de silicate de calcium agissent comme des sites de réticulation pour les liaisons de phosphate d'alumine-silice.

13. Procédé selon l'une quelconque des revendications 8 à 12, dans lequel le rapport en poids des particules de silicate de calcium/solution de phosphate d'alumine-silice est compris entre 0,1 et 1,1, avantageusement entre 0,3 et 0,9, de préférence entre 0,4 et 0,7.

14. Procédé selon l'une quelconque des revendications 8 à 13, dans lequel une charge est mélangée avec les particules de silicate de calcium avant d'être mélangée avec la solution acide de phosphate d'alumine-silice et/ou une charge est mélangée au mélange silicate de calcium/solution de phosphate d'alumine-silice, avant son durcissement.

15. Procédé selon l'une quelconque des revendications 8 à 14, dans lequel le durcissement du liant est effectué à une température comprise entre 0°C et 50°C.

16. Procédé selon l'une quelconque des revendications 8 à 15, dans lequel le liant est durci sous pression.

17. Procédé selon l'une quelconque des revendications 8 à 16, dans lequel le silicate de calcium insoluble dans l'eau est un métasilicate de calcium ayant une nature substantiellement aciculaire avec un rapport de longueur/diamètre de 2/1 à 50/1, avantageusement de 3/1 à 20/1.

18. Procédé selon la revendication 17, dans lequel le métasilicate de calcium a une longueur moyenne de 10 µm à 10 mm, avantageusement de 50 µm à 5 mm.

19. Procédé selon l'une quelconque des revendications 8 à 18, dans lequel la quantité de silicate de calcium ajouté à la solution acide de phosphate d'alumine-silice est telle que le rapport en poids du silicate de calcium/SiO₂ présent dans la solution acide est compris entre 1 et 5, avantageusement compris entre 1,5 et 3,5.

20. Procédé selon la revendication 19, dans lequel la quantité de silicate de calcium ajouté à ladite solution acide de phosphate d'alumine-silice est telle que le rapport en poids silicate de calcium/SiO₂ présent dans la solution acide est plus grand que 2.

21. Procédé selon l'une quelconque des revendications 8 à 20, dans lequel la solution acide de phosphate d'alumine-silice est préparée en mélangeant un mélange de silice et/ou d'alumine avec un acide constitué substantiellement uniquement d'acide phosphorique et en ajoutant peut-être encore à la solution acide formée de la silice et/ou de l'alumine.

22. Procédé selon la revendication 21, dans lequel la silice utilisée pour la préparation de la solution acide de phosphate d'alumine-silice est de la silice précipitée.
